# EUROPÄISCHE PATENTSCHRIFT

(11) **EP 1 191 667 B1**
(45) Veröffentlichungstag und Bekanntmachung des Hinweises auf die Patenterteilung: **24.02.2016**
(21) Anmeldenummer: 01810779.7
(22) Anmeldetag: 13.08.2001
(51) Int. Cl.: H02K 5/14, H02K 9/28, H02K 5/10

(54) **Universal-Elektromotor für Handwerkzeuggeräte**
Universal motor for portable tool
Moteur universel pour outil portatif

(30) Priorität: 24.08.2000 DE 10041631
(43) Veröffentlichungstag der Anmeldung: 27.03.2002
(73) Patentinhaber: Hilti Aktiengesellschaft, 9494 Schaan (LI)
(72) Erfinder: Burger, Helmut, 82272 Moorenweis (DE); Schuster, Hermann, 81377 München (DE)
(74) Vertreter: Hilti Aktiengesellschaft Corporate Intellectual Property

(56) Entgegenhaltungen:
- GB-A- 429 554
- US-A- 3 919 574
- US-A- 4 626 720
- PATENT ABSTRACTS OF JAPAN vol. 2000, no. 23, 10. Februar 2001 (2001-02-10) -& JP 2001 157408 A (MAKITA CORP), 8. Juni 2001 (2001-06-08)

## Beschreibung

Die Erfindung bezeichnet einen Elektromotor mit einem Kommutator, vorzugsweise einen im Reihenschluss betriebenen, durchzugsbelüfteten Universal-Elektromotor mit einer hohen Leistungsdichte, Insbesondere als Antrieb für Elektrohandwerkzeuggeräte mit hoher Staubbelastung wie Schleifgeräte, Bohrhammer usw, wie im Oberbegriff angegeben und aus GB 429 554 bekannt.

Derartige Elektromotoren bestehen aus einem sich um die Drehachse drehende Rotor, welcher als Anker ausgeführt mit einer stromdurchflossenen Ankerwicklung versehen ist, und einem, bei der Drehung des Rotors die Fusspunkte der Ankerwicklungen umschaltenden, aus Lamellen das Rotors und Kohlebürsten des Stators bestehenden, Kommutator.

Bei den zur Abführung der Erregungswärme wegen ihrer hohen Leistungsdichte durchzugsbelüftete Universal-Elektromotoren führen im Kühlluftstrom mitgeführte Staubpartikel einerseits auf Grund der hohen Relativbewegung zu einem Aufrauen der Lamellenoberfläche durch Strahlverschlelss und andererseits durch direktes Eindringen zwischen die Lamellen und die Kohlebürsten zu einem erhöhten Abrasiwerschleiss der Kohlebürsten, welche zumeist die Lebensdauer des Kommutators und somit des Elektromotor bzw. des Elektrohandwerkzeuggerätes begrenzen.

Nach der US6025662 weist ein Elektrohandwerkzeuggerät mit einem durchzugbelüfteten Elektromotor mit einem Kommutator ein Schutzschild mit zwei den Kohlebürsten zugeordneten Schutzabdeckungen auf, welche den kühlenden Luftstrom direkt vor den kohlebürsten ablenken. Die übrigen Lamellen sind weiterhin den im Kühlluftstrom mitgeführter Staubpartikein ausgesetzt

Die US4311935 beschreibt ein Schutzschild aus nichtleitfähigem Material, welches, einen spitzwinkeligen Sektor des Kommutators umschliessend, in Drehrichtung vor den Kohlebürsten angeordneten ist. Die übrigen Lamellen sind weiterhin den im Kühlluftstrom mitgeführten Staubpartikeln ausgesetzt.

Nach der US3919574 ist der Kommutator vollständig mit einem Schutzschild aus nichtleittähigem Material wie Kunststoff gekapselt. Dabei umgibt das Schutzschild un fänglich die Kohlebürsten und über einen schmalen radialen Luftspalt die Lammelen. Nachteilig ist die durch das Kunststoff-Schutzschild wesentlich verminderte Kühlung des Kommutators.

Die Aufgabe der Erfindung besteht in der Realisierung eines vollständigen Schutzschildes gegen im Kühlluftstrom mitgeführte Staubpartikel für den Kommutator eines durchzugsbelüfteten Universal-Elektromotor, welcher eine ausreichende Kühlung des Kommutators ermöglicht.

Die Aufgabe wird im wesentlichen durch die Merkmale der unabhängigen Ansprüche gelöst. Vorteilhafte Weiterbildungen ergeben sich aus den Unteransprüchen.

Im wesentlich wird bei einem durchzugsbelüfteten Universal-Elektromotor der Kommutator von einem umfänglich geschlossenen Schutzschild aus steifen und wärmeleitfähigen Material ummantelt, welches mit seinem Innenmantelradius unter Ausbildung eines isolierenden, radialen Luftspaltes zumindest den mit den Kohlebürsten in Reibkontakt stehenden axialen Kontaktbereich umgibt.

Durch die Rotation der Lamellen um die Rotorachse entsteht ein rotierender Luftstrom innerhalb des ringförmig ausgebildeten Luftspaltes, welcher sowohl eine gute Wärmekonvektion innerhalb des Luftspaltes als auch einen geringen Wärmeübergangswiderstand zwischen Lammelle-Luft bzw. Luft-Schutzschild bewirkt.

Das steife Schutzschild besteht vorzugsweise aus dünnem Metallblech wie Aluminium und weist somit eine gute Wärmeleitfähigkeit auf.

Die Oberfläche des Schutzschildes ist vorteilhaft beidseitig mikroskopisch glatt ausgeführt, wodurch sich ein geringer Wärmeübergangswiderstand zur Luft sowie eine geringere Haftneigung von Staubpartikeln ergibt

Die Oberfläche des Schutzschildes ist weiter vorteilhaft matt geschwärzt, wodurch eine gute Wärmeabstrahlung gewährleistet ist.

Vorteilhaft ist das Metallblech profiliert, vorteilhaft wellenförmig gefaltet, wodurch sich sowohl eine hohe Biegesteifigkeit als auch eine grössere Oberfläche bezogen auf den Innenmantelradius ergibt.

Die Wellenfront des wellenförmig gefalteten Metallblechs verläuft vorteilhaft wendelförmig um die Rotorachse herum, wodurch sich vermittelt durch die Rotation der Lamellen senkrecht dazu längs der einzelnen Wellen ein Luftstrom ausbildet, der über die beidseitig vorhandenen, axialen Faltenöffnungen einen Luftaustausch innerhalb der Faltenöffnungen ermöglicht.

Vorteilhaft bilden die Lamellen zusätzlich einen axial angrenzenden, nicht im Reibkontakt mit den Kohlebürsten stehenden, Kühlbereich aus, innerhalb welchen die Lamellen weiter vorteilhaft kleine radiale Flügelstümpfe aufweisen, welche zu einer besseren Luftzirkulation und teilweise zur Kühlung der Lamellen beitragen.

Die Erfindung wird bezüglich eines vorteilhaften Ausführungsbeispiels näher erläutert mit:
Fig. 1 als Universal-Elektromotor mit Kommutator im Querschnitt
Fig. 2 als Universal-Elektromotor mit Kommutator im Teillängsschnitt

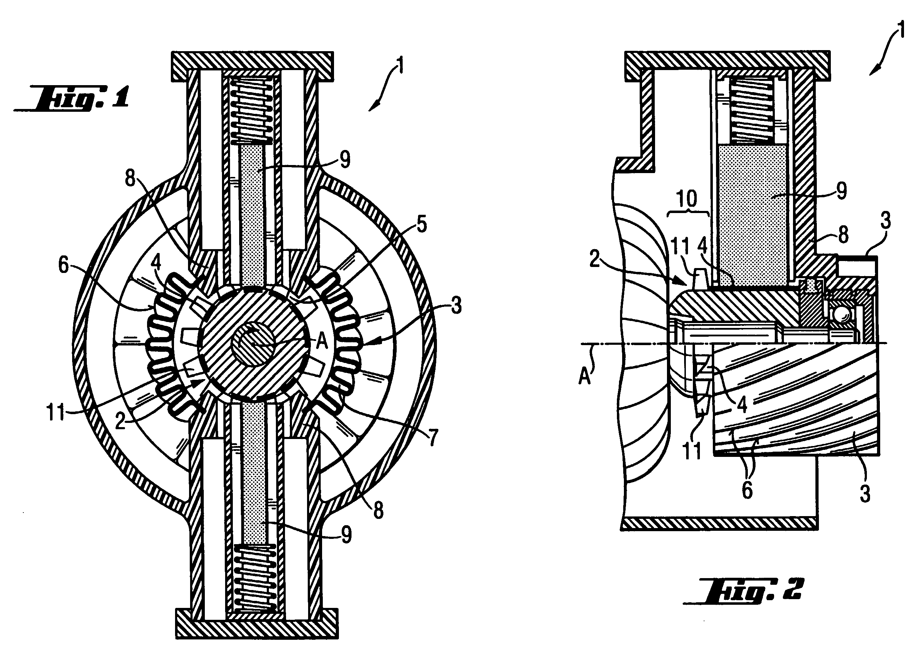

Nach Fig. 1 weist ein durchzugsbelüfteten Universal-Elektromotor 1 mit einem im Querschnitt dargestellten Kommutator 2 ein umfänglich geschlossenes Schutzschild 3 auf, welches die auf dem um eine Achse A drehbaren Rotor angeordneten Lamellen 4 mit einem steifen und wärmeleitfähigen Material ummantelt. Das Schutzschild 3 bildet mit seinem Innenmantelradius einen isolierenden, radialen Luftspalt 5 aus und ist aus wellenförmig gefaltetem Metallblech ausgebildet, wobei die Wellenfront 6 wendelförmig um die Rotorachse A herumläuft und an den Stirnseiten jeweils Faltenöffnungen 7 ausgebildet sind. Der zwischen den Kohlebürstenhalterungen 8 für die Kohlebürsten 9 verbleibende Winkelbereich ist von dem Schutzschild 3 vollständig umfänglich geschlossen.

Nach Fig. 2 ist ein Teillängsschnitt längs der Achse A im oberen Bildteil in der Ebene der Kohlebürstenhalterung 8 und im unteren Teillängsschnitt senkrecht dazu dargestellt. Das Schutzschild 3 umgibt den mit Kohlebürsten 9 in Reibkontakt stehenden axialen Kontaktbereich der Lamellen 4. Die Lamellen 4 bilden einen axial angrenzenden, nicht im Reibkontakt mit den Kohlebürsten 9 stehenden, Kühlbereich 10 aus, innerhalb welchem die Lamellen 4 kleine radiale Flügelstümpfe 11 aufweisen.

## Patentansprüche

1. Universal-Elektromotor für den Antrieb eines Elektrohandwerkzeuggerätes mit hoher Staubbelastung, mit einem Kohlebürsten (9) und Lamellen (4) aufweisenden Kommutator (2), welcher zum Schutz vor im durchzugsbelüfteten Kühlluftstrom mitgeführter Staubpartikeln ein Schutzschild (3) aufweist, welches mit seinem Innenmantetradius über einen isolierenden, radialen Luftspalt (5) die Lamellen (4) zumindest in einem mit den Kohlebürsten (9) in Reibkontakt stehenden axialen Kontaktbereich umfänglich geschlossen umgibt, wobei das Schutzschild (3) aus dünnem Metallblech besteht, **dadurch gekennzeichnet, dass** das Metallblech, wellenförmig gefaltet ist.

2. Universal-Elektromotor nach Anspruch 1, **dadurch gekennzeichnet, dass** die Oberfläche des Schutzschildes (3) beidseitig mikroskopisch glatt ausgeführt ist.

3. Universal-Elektromotor nach Anspruch 1 oder Anspruch 2, dadurch gekenntzeichnet, dass die Oberfläche des Schutzschildes (3) matt geschwärzt ist

4. Universal-Elektromotor nach Anspruch 1, **dadurch gekennzeichnet, dass** die Wellenfront (6) des Metallblechs wendelförmig um die Rotorachse (A) herum verläuft.

5. Universal-Elektromotor nach Anspruch 1, **dadurch gekennzeichnet, dass** das Metallblech an beiden Stirnseiten jeweils Faltenöffnungen (7) aufweist.

6. Universal-Elektromotor nach einem der vorherigen Ansprüche, **dadurch gekennzeichnet, dass** die Lamellen (4) zusätzlich zu dem Kontaktbereich einen axial angrenzene en, nicht im Reibkontakt mit den Kohlebürsten (9) stehenden, Kühlbereich (10) ausbilden.

7. Universal-Elektromotor nach Anspruch 6, **dadurch gekennzeichnet, dass** die Lamellen innerhalb des Kühlbereiches (10) kleine radiale Flügetetümpfe (11) aufweisen.

## Claims

1. Universal electric motor for the drive of a hand-held power tool subjected to a high dust load, comprising a commutator (2) having carbon brushes (9) and segments (4) and a protective shield (3) for protection against dust particles entrained in the enclosed-ventilated cooling-air stream, said protective shield circumferentially enclosing the segments (4) by means of its inner circumferential radius via an insulating radial air gap (5) at least in an axial contact region in frictional contact with the carbon brushes (9), wherein the protective shield (3) consists of thin sheet metal, **characterised in that** the sheet metal is corrugated.

2. Universal electric motor according to claim 1, **characterised in that** the surface of the protective shield (3) is microscopically smooth on both sides.

3. Universal electric motor according to claim 1 or claim 2, **characterised in that** the surface of the protective shield (3) has a blackened matt finish.

4. Universal electric motor according to claim 1, **characterised in that** the corrugated surface (6) of the sheet metal extends helically around the rotor axis (A).

5. Universal electric motor according to claim 1, **characterised in that** the sheet metal is provided on both end faces with respective corrugation openings (7).

6. Universal electric motor according to one of the preceding claims, **characterised in that**, in addition to the contact region, the segments (4) form an axially adjoining cooling region (10) not in frictional contact with the carbon brushes (9).

7. Universal electric motor according to claim 6, **characterised in that** the segments have small radial fin stubs (11) within the cooling region (10).

## Revendications

1. Moteur électrique universel pour l'entraînement d'un outil électrique tenu à la main ayant une charge de poussières élevée, comportant un commutateur (2) comportant des balais de charbon (9) et des lamelles (4), lequel commutateur comporte un écran de protection (3) destiné à protéger contre des particules de poussière transportées avec un courant d'air de refroidissement ventilé, lequel écran de protection a un rayon d'enveloppe interne formant un entrefer radial isolant (5) et entoure les lamelles en les enfermant de manière circonférentielle (4) au moins dans une zone de contact axial en contact de frottement avec les balais de charbon (9), dans lequel l'écran de protection (3) est constitué d'une mince tôle métallique, **caractérisé en ce que** la tôle métallique est pliée de manière ondulée.

2. Moteur électrique universel selon la revendication 1, **caractérisé en ce que** la surface de l'écran de protection (3) est formée de manière microscopiquement lisse des deux côtés.

3. Moteur électrique universel selon la revendication 1 ou la revendication 2, **caractérisé en ce que** la surface de l'écran de protection (3) est noircie et mate.

4. Moteur électrique universel selon la revendication 1, **caractérisé en ce que** le front d'onde (6) de la tôle métallique s'étend en forme d'hélice autour de l'axe de rotation (A).

5. Moteur électrique universel selon la revendication 1, **caractérisé en ce que** la tôle métallique comporte des ouvertures de pliage (7) sur chacune des deux faces avant.

6. Moteur électrique universel selon l'une des revendications précédentes, **caractérisé en ce que** les lamelles (4) forment, en plus de la zone de contact, une zone de refroidissement (10) axialement contigüe, qui n'est pas en contact de frottement avec les balais de charbon (9).

7. Moteur électrique universel selon la revendication 6, **caractérisé en ce que** les lamelles comportent de petits tronçons d'ailette radiaux (11) à l'intérieur de la zone de refroidissement (10).
